# EUROPÄISCHE PATENTSCHRIFT

(11) **EP 0 995 479 B1**
(45) Veröffentlichungstag und Bekanntmachung des Hinweises auf die Patenterteilung: **11.05.2005**
(21) Anmeldenummer: 99120530.3
(22) Anmeldetag: 15.10.1999
(51) Int. Cl.: B01D 53/10

(54) **Vorrichtung und Verfahren zur Adsorption oder Chemisorption von gasförmigen Bestandteilen aus einem Gasstrom**
Device and process for adsorption or chemisorption of gaseous components of a gas stream
Dispositif et procédé pour l'adsorption, physique ou chimique, des composants d'un courant de gaz

(30) Priorität: 22.10.1998 CH 213198
(43) Veröffentlichungstag der Anmeldung: 26.04.2000
(73) Patentinhaber: Von Roll Umwelttechnik AG, 8005 Zürich (CH)
(72) Erfinder: Koller, Felix, 5106 Veltheim (CH); Frey, Rudolf, 8307 Effretikon (CH); Flury, Rainer, 4702 Oensingen (CH)
(74) Vertreter: Patentanwälte Schaad, Balass, Menzl & Partner AG

(56) Entgegenhaltungen:
- EP-A- 0 476 300
- DE-A- 3 409 140
- DE-A- 3 925 818
- FR-A- 2 626 192

## Beschreibung

Die Erfindung betrifft eine Vorrichtung zur Adsorption. oder Chemiesorption von gasförmigen Bestandteilen aus einem Gasstrom gemäss dem Oberbegriff von Anspruch 1. Die Erfindung betrifft weiter ein Verfahren zur Adsorption oder Chemiesorption von gasförmigen Bestandteilen aus einem Gasstrom gemäss dem Oberbegriff von Anspruch 11.

Das Dokument FR-A-2626192 beschreibt eine Filtervorrichtung zur Adsorption, bei der die Menge an ausgefälltem Staub die rezirkuliert wird durch Verstellen eines Spaltes regelbar ist.

Aus der Druckschrift EP 0 476 300 B1 ist eine Vorrichtung sowie ein Verfahren zur Adsorption oder Chemiesorption von gasförmigen Bestandteilen aus einem Gasstrom bekannt. Nachteilig daran ist die Tatsache, dass die Staubrückführquote schwierig einzuhalten ist, da diese durch die Menge des sich in der Abscheideanlage befindlichen Staubes bestimmt wird. Ein weiterer Nachteil ist die Tatsache, dass die Stäube nur im Off-Line-Betrieb entfernbar sind, was zur Folge hat, dass eine Filterkammer vom On-Line-Betrieb in den Off-Line-Betrieb zu fahren ist, danach die Filterkammer zu entleeren ist, um daraufhin die Filterkammer wieder auf On-Line-Betrieb zu fahren.

Es ist Aufgabe der vorliegenden Erfindung eine wirtschaftlich vorteilhaftere Vorrichtung bzw. ein wirtschaftlich vorteilhafteres Verfahren vorzuschlagen.

Diese Aufgabe wird gelöst mit einer Vorrichtung aufweisend die Merkmale von Anspruch 1. Die Unteransprüche 2 bis 9 beziehen sich auf weitere, vorteilhaft ausgestaltete Vorrichtungen. Die Aufgabe wird weiter gelöst mit einem Verfahren aufweisend die Merkmale von Anspruch 11. Die Unteransprüche 12 und 13 beziehen sich auf weitere, vorteilhafte Verfahrensschritte.

Die Aufgabe wird insbesondere gelöst mit einer Filtervorrichtung zur Adsorption von gasförmigen Bestandteilen aus einem Gasstrom, umfassend eine Filterkammer mit darin angeordneten Filtern, eine über die Filter fluidleitend mit der Filterkammer verbundene Reingaskammer, sowie ein unterhalb der Filterkammer angeordneter, zur Filterkammer hin offener Sammelraum mit einem sich gegen unten verjüngenden Innenraum, wobei im unteren Bereich des Sammelraumes ein von aussen mündender Rohgaskanal in Richtung zu den Filtern hin verstellbar angeordnet ist, und wobei im unteren Bereich eine gegen aussen führende Austragvorrichtung für Staub angeordnet ist.

Der in der Filterkammer insbesondere in vertikaler Richtung verstellbare Rohgaskanal weist den Vorteil auf, dass der sich im unteren Bereich des Sammelraumes befindliche Staub vom einströmenden Rohgas erfasst, hochgeschleudert, und dadurch in der Filterkammer rezirkuliert wird, wobei durch die Verstellbarkeit der Lage des Rohgaskanales die Menge an rezirkuliertem Staub einstellbar ist. Mündet der Rohgaskanal relativ tief angeordnet in die Filterkammer, so wird ein grösserer Anteil des sich im unteren Bereich der Filterkammer angesammelten Staubes erfasst und rezirkuliert. Mündet der Rohgaskanal relativ hoch angeordnet in die Filterkammer, so übt das einströmende Rohgas kaum eine mitnehmende Wirkung auf den sich im unteren Bereich der Filterkammer angesammelten Staub aus, weshalb eine relativ geringe Menge Staub in der Filterkammer rezirkuliert wird. Mit einer ausserhalb der Filterkammer angeordneten Antriebsvorrichtung ist die Lage des Rohgaskanals und dadurch die Rezirkulationsmenge des Staubes einstellbar. Zudem ist eine im unteren Bereich der Filterkammer angeordnete Austragsvorrichtung angeordnet, welche den angesammelten Staub ansteuerbar aus der Filterkammer zu entfernen erlaubt. Diese Austragsvorrichtung erlaubt die gesamte Menge des sich in der Filterkammer befindlichen Staubs bzw. Adsorbens einzustellen.

Der Effekt der Staubmitnahme durch das einströmende Rohgas kann mit zusätzlichen, geeignet angeordneten, strömungsbeeinflussenden Mitteln in weiten Grenzen beeinflusst werden. So kann der Rohgaskanal in ein beispielsweise rohrförmig ausgestaltetes Leitelement münden. Mündet der Rohgaskanal relativ tief angeordnet in das Leitelement, so dass eine entsprechend geringe Eindringtiefe besteht, wird dadurch im Leitelement eine geringe Sogwirkung erzeugt und wenig Staub vom Leitelement angesogen. Mündet der Rohgaskanal dagegen relativ hoch angeordnet in das Leitelement, so dass der Rohgaskanal über eine längere Distanz im Leitelement verläuft, wird dadurch im Leitelement eine grössere Sogwirkung erzeugt und entsprechend mehr Staub vom Leitelement angesogen.

Die erfindungsgemässe Filtervorrichtung ermöglichst es somit über die Austragsvorrichtung die gesamte sich in der Filterkammer befindliche Staubmenge einzustellen. Über die Verstellung des Rohgaskanals ist zudem der Staubstrom, d.h. die rezirkulierte Masse Staub pro Zeiteinheit in der Filtervorrichtung einstellbar. Nebst diesen vorteilhaften Einstellmöglichkeiten weist die erfindungsgemässe Filtervorrichtung den Vorteil auf, dass diese zum Entfernen des Staubes nicht stillgelegt werden muss. Die hohe mögliche Staubdichte bzw. die hohe mögliche Rezirkulationsgeschwindigkeit in der Filterkammer ermöglicht das Rohgas sehr gut zu reinigen.

In einer vorteilhaften Ausgestaltung sind in der Filtervorrichtung keramische Filterkerzen angeordnet, was den Vorteil ergibt, dass die Vorrichtung mit Rauchgastemperaturen bis 850 Grad C betreibbar ist.

Vorteile und Wirkungen der Erfindung werden anhand von in den nachfolgenden Zeichnungen dargestellten Ausführungbeispielen näher erläutert. Es zeigen:
- Fig. 1: einen Querschnitt durch eine Filtervorrichtung;
- Fig. 2: einen Querschnitt durch ein weiteres Ausführungsbeispiel einer Filtervorrichtung.

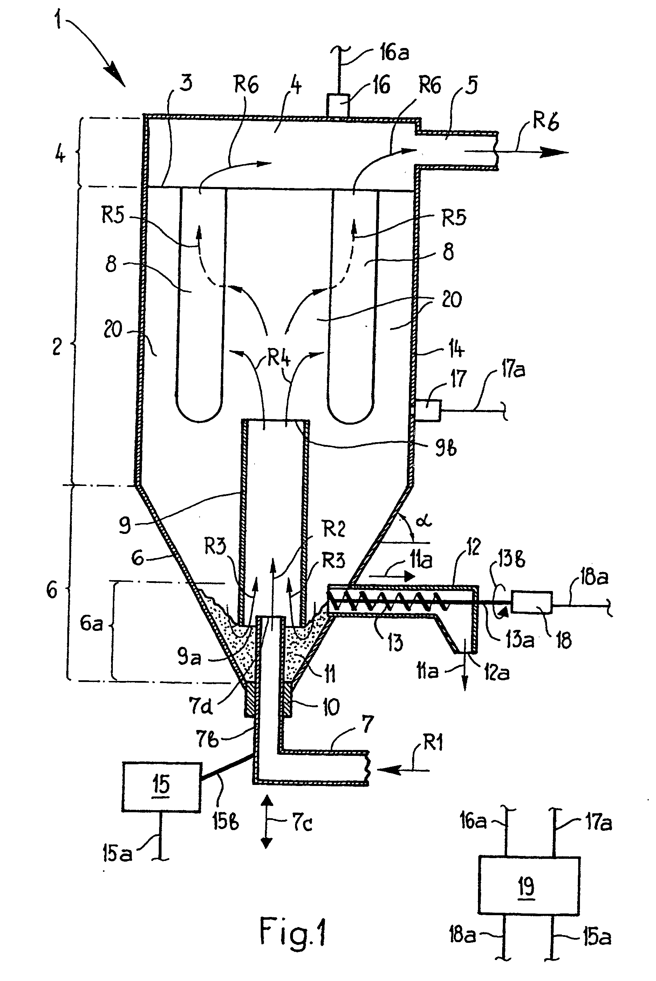

Fig. 1 zeigt eine Filtervorrichtung 1, welche einen Filterraum 2, auch als Abscheideraum bezeichnet umfasst, welcher gegen unten offen in einen Sammelraum 6 mündet. Der Sammelraum 6 weist im unteren Bereich 6a einen sich gegen unten verjüngenden Innenraum auf, welcher im dargestellten Ausführungsbeispiel konisch verlaufend ausgestaltet ist. Zuunterst am Sammelraum 6 ist ein Dichtelement 10 angeordnet, in welchem ein Rohgaskanal 7b,7 in Richtung 7c verschiebbar gelagert ist. Im dargestellten Beispiel verläuft die Verschieberichtung 7c in vertikaler Richtung. Ausserhalb der Filtervorrichtung 1 ist eine über ein elektrisches Kabel 15a ansteuerbare Antriebsvorrichtung 15 angeordnet, welche über ein mechanisches Mittel 15b an den Rohgaskanal 7b gekoppelt ist und dessen Höhenverstellung in Richtung 7c erlaubt. Durch diese Höhenverstellung wird die Lage der Austrittsöffnung 7d des Rohgaskanals 7b im Sammelraum 6 verstellt. Wie dargestellt sammelt sich im untersten Bereich des Sammelraumes 6 der im Rohgas R1 enthaltene oder dem Rohgas zugeführte Staub an, wobei als Staub auch Adsorbentien oder Chemieadsorpentien bezeichnet sind. Die Austrittsöffnung 7d wirkt als Düse, durch welche das Rohgas R2 in den Sammelraum 6 und danach in den Filterraum 2 einströmt, wobei die Lage der Austrittsöffnung 7d bezüglich der Höhe des sich angesammelten Staubes 11 die Menge Staub beeinflusst, welche pro Zeiteinheit von Rohgasstrom R2 erfasst und als Gasgemisch R4 nach oben geschleudert und rezirkuliert wird. Im Filterraum 2 sind Filter 8 angeordnet, welche fluidleitend mit einer darüber angeordneten Reingaskammer 4 verbunden sind. Das Gasgemisch R4 strömt teilweise in die Filter 8, wobei Stäube an deren Oberfläche abgeschieden werden, und das derart gefilterte Gas R5 tritt über die Reingaskammer 4 als Reingas R6 in den Reingaskanal 5. Die von den Filtern 8 abfallenden Stäube sammeln sich im Sammelraum 6. Die Filter können als Schlauchfilter bzw. als Gewebefilter ausgestaltet sein. In einer besonders vorteilhaften Ausgestaltung der Filtervorrichtung 1 sind die Filter 8 als Keramikfilter ausgestaltet.

Vorteilhafterweise ist im Innenraum der Filtervorrichtung 1 ein in Verbindung mit dem Rohgaskanal 7b eine Sogwirkung bewirkendes Leitelement 9 angeordnet. Der Rohgaskanal 7b sowie das rohrförmige Leitelement 9 sind derart gegenseitig angeordnet, dass der Rohgaskanal 7b in das Leitelement hineinschiebbar ist, so dass auf Grund der Verschiebbarkeit des Rohgaskanals 7b in Richtung 7c die Sogwirkung der Leitelementes einstellbar ist. Somit ist die Menge an Rezirkulationsgas R3, und damit auch die Menge an rezirkuliertem Staub pro Zeiteinheit einstellbar. Im dargestellten Beispiel ragt die Öffnung 7d in die Mündung 9a des Leitelementes 9 hinein. Die Mündung 7d könnte jedoch auch ausserhalb des Leitelementes 9, unterhalb der Eintrittsöffnung 9a angeordnet sein. Um die Wirkung des Leitelementes zusätzlich zu beeinflussen könnte auch das Leitelement 9 selbst in Bewegungsrichtung 7c höhenverstellbar und gegebenenfalls ansteuerbar gelagert sein. Das Leitelement 9 kann beispielsweise einen kreisförmigen, rechteckigen oder quadratischen Querschnitt aufweisen.

Im unteren Bereich 6a ist zudem eine Austragvorrichtung 12 angeordnet, welche eine um eine Welle 13a in Richtung 13b drehbare Schnecke 13 aufweist, durch welche der Staub 11 in Förderrichtung 11a durch die Austrittsöffnung 11a förderbar und damit aus dem Innenraum der Filtervorrichtung 1 entfernbar ist. Dadurch kann die Gesamtmenge des sich im Innenraum der Filtervorrichtung 1 befindlichen Staubes ansteuerbar beeinflusst werden.

Die Filtervorrichtung ist beispielsweise wie folgt ansteuerbar. Ein Drucksensor 17 ist zur Messung des Innendruckes des Filterraumes 2 angeordnet. Ein zweiter Drucksensor 16 ist zur Messung des Druckes in der Reingaskammer 4 angeordnet. Eine Regelvorrichtung 19, welche über elektrische Leitungen 16a,17b mit den Sensoren 16,17 verbunden ist, bestimmt den Differenzdruck, und vergleicht diesen mit einem vorgegebenen Solldifferenzdruck. Sobald der Differenzdruck den Sollwert übersteigt wird die Antriebsvorrichtung 18 über die elektrische Leitung 18a in Betrieb gesetzt und eine Menge Staub 11 in Förderrichtung 11a aus dem Sammelraum 6 entfernt. Zusätzlich oder an Stelle der Austragsvorrichtung kann die Regelvorrichtung 19 über die elektrische Leitung 15a die Antriebsvorrichtung 15 betätigen und die Lage des Rohgaskanals 7b derart verändern, dass der Staubstrom, d.h. die rezirkulierte Masse Staub pro Zeiteinheit reduziert wird. Zudem kann durch das Betätigen von nicht dargestellten, auf die Filter 8 wirkende Fluiddüsen, ein Abreinigen der Filter 8 bewirkt werden.

Der Neigungswinkel α der Wand des Sammelraumes 6 ist derart gross zu wählen, dass sichergestellt ist, dass sich der Staub 11 im unteren Bereich 6a ansammelt. Die Filtervorrichtung 1 gemäss Fig. 1 könnte auch einen wesentlich grösseren Durchmesser aufweisen, wobei im Filterraum 2 die Anordnung einer wesentlich grösseren Anzahl Keramikfilter 8 möglich ist. Um einen genügend grossen Neigungswinkel α zu gewährleisten ist bei dieser Ausgestaltung eine entsprechend hoch ausgestalteter Sammelraum 6 erforderlich.

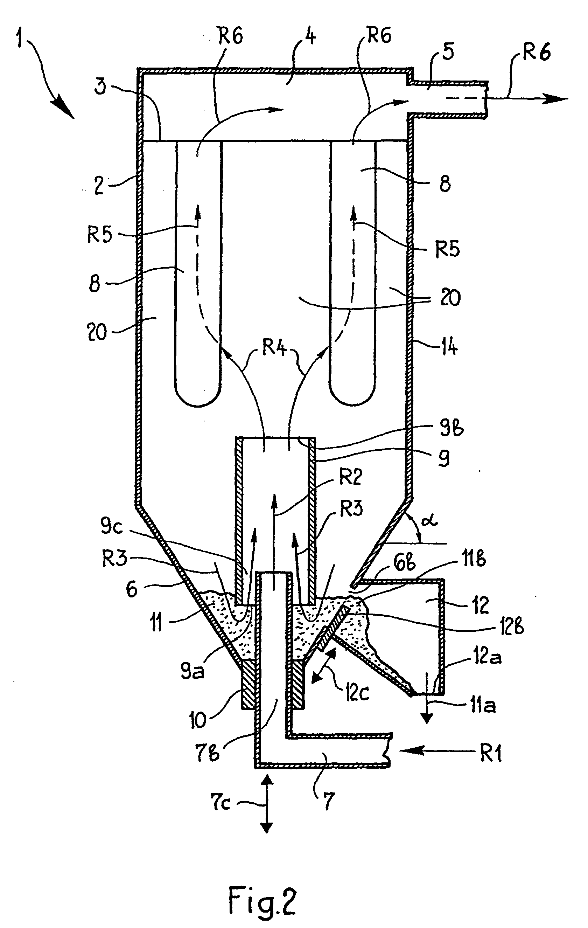

Fig. 2 zeigt, bei ansonst gegenüber Fig. 1 gleicher Ausgestaltung der Filtervorrichtung 1, ein weiteres Ausführungsbeispiel einer Austragvorrichtung 12. Der Sammelraum 6 weist eine Öffnung auf, an welcher die Austragvorrichtung 12 angeordnet ist. Die Austragvorrichtung 12 umfasst ein in Richtung 12c verstellbares Schleusenteil 12b, welches die lichte Weite der Öffnung zu verstellen erlaubt, so dass über die sich bildende Abbruchstelle 11b mehr oder weniger Staub 11 abgeführt und in Förderrichtung 11a ausgetragen wird.

Es können eine Mehrzahl von Filtervorrichtungen 1 über schliessbare Ventile in einer Filteranlage angeordnet sein. Dies erlaubt einzelne Filtervorrichtungen 1 stillzusetzen, um ein regenerieren der Keramikfilter zu ermöglichen. In der Filtervorrichtung 1 können auf die Keramikfilter 8 ausgerichtete Fluiddüsen angeordnet sein, welche ein Abblasen der Keramikfilter erlauben, um diese von anhaftendem Staub zu reinigen. Dieses Gas wird vorzugsweise von der Reingasseite zugeführt. Die Keramikfilter, auch als Filterkerzen bezeichnet, können eine relativ geringe Bauhöhe von beispielsweise 2 Meter aufweisen, weshalb eine Filtervorrichtung 1 mit geringer Bauhöhe herstellbar ist.

Bei der erfindungsgemässen Trockenadsorption wird dem Rohgas ein Additiv zugemischt, wobei die sich im Rohgas befindlichen Schadstoffe wie Chloride, Sulfate, Quecksilber oder Fluor, an das Additiv binden. Die erfindungsgemässe Filtervorrichtung 1 erlaubt den Staub mit hoher Geschwindigkeit zu rezirkulieren, was im Filterraum 2 zu einer hohen Durchwirbelung führt, woraus eine hohe Kontaktwahrscheinlichkeit des Adsorptionsmittel mit den Schadstoffen resultiert, was eine gute Reinigung des Rohgases bewirkt.

## Patentansprüche

1. Filtervorrichtung (1) zur Adsorption von gasförmigen Bestandteilen aus einem Gasstrom, umfassend eine Filterkammer (2) mit darin angeordneten Filtern (8), eine über die Filter (8) fluidleitend mit der Filterkammer (2) verbundene Reingaskammer (4), sowie ein unterhalb der Filterkammer (2) angeordneter, zur Filterkammer (2) hin offener Sammelraum (6) mit einem sich gegen Unten verjüngenden Innenraum, **dadurch gekennzeichnet, dass** im unteren Bereich (6a) des Sammelraumes (6) ein von aussen mündender Rohgaskanal (7b) in Richtung (7c) zu den Filtern (8) hin verstellbar angeordnet ist, und dass im unteren Bereich (6a) eine gegen aussen führende Austragvorrichtung (12) für Staub angeordnet ist.

2. Filtervorrichtung (1) nach Anspruch 1, **dadurch gekennzeichnet, dass** das Filter (8) als ein Keramikfilter oder ein Schlauchfilter ausgestaltet ist.

3. Filtervorrichtung (1) nach einem der vorhergehenden Ansprüche, **dadurch gekennzeichnet, dass** zumindest im Sammelraum (6) ein in Richtung (7c) zu den Filtern verlaufendes rohrförmiges Leitelement (9) angeordnet ist, und dass das Leitelement (9) sowie der Rohgaskanal (7b) derart gegenseitig ausgestaltet und angeordnet sind, dass der Rohgaskanal (7b) in das Leitelement (9) mündet, und sich zwischen dem Leitelement (9) und dem Rohgaskanal (7b) ein in Richtung (7c) zu den Filtern verlaufener Spalt (9c) ergibt.

4. Filtervorrichtung (1) nach einem der vorhergehenden Ansprüche, **dadurch gekennzeichnet, dass** am unteren Ende des Sammelraumes (6) ein Dichtelement (10) angeordnet ist, durch welches der Rohgaskanal (7b) in Richtung (7c) zu den Filtern verstellbar verläuft.

5. Filtervorrichtung (1) nach einem der vorhergehenden Ansprüche, **dadurch gekennzeichnet, dass** der Sammelraum (6) eine geneigt, insbesondere konisch verlaufende Innenwand aufweist.

6. Filtervorrichtung (1) nach einem der vorhergehenden Ansprüche, **dadurch gekennzeichnet, dass** die Austragvorrichtung (12) als eine antreibbare Förderschnecke (13) ausgestaltet ist.

7. Filtervorrichtung (1) nach einem der Ansprüche 1 bis 5, **dadurch gekennzeichnet, dass** der Sammelraum (6) eine Öffnung (6b) aufweist, und die Austragvorrichtung (12) eine bewegbare Abdeckvorrichtung (12b) zum Beeinflussen der lichten Weite der Öffnung (6b) aufweist.

8. Filtervorrichtung (1) nach einem der vorhergehenden Ansprüche, **dadurch gekennzeichnet, dass** eine Antriebsvorrichtung (15) zum Verändern der Lage des Rohgaskanals (7b) in Richtung (7c) angeordnet ist.

9. Filtervorrichtung (1) nach einem der vorhergehenden Ansprüche umfassend Sensoren (16,17) zum Bestimmen der Staubmenge, Antriebsmittel (15,18) zum Betätigen der Stellung des Rohgaskanals (7b) sowie der Austragsvorrichtung (12) sowie eine Ansteuervorrichtung (19), welche zumindest die Signale der Sensoren (16,17) erfasst und die Antriebsmittel (15,18) ansteuert.

10. Anlage, umfassend zumindest eine Filtervorrichtung (1) nach einem der vorhergehenden Ansprüche.

11. Verfahren zur Adsorption oder Chemiesorption von gasförmigen Bestandteilen aus einem Rohgasstrom (R1), wobei der Rohgasstrom (R1) einer Filtervorrichtung (1) gemäss einem der Ansprüche 1 bis 9 zugeführt und darin Stäube abgeschieden und ausgefällt werden, **dadurch gekennzeichnet, dass** der Rohgasstrom (R1) derart der Abscheidevorrichtung (1) zugeführt wird, dass die Menge an ausgefälltem Staub, welche in der Abscheidevorrichtung (1) rezirkuliert wird, während dem Betrieb ansteuerbar ist.

12. Verfahren nach Anspruch 11, **dadurch gekennzeichnet, dass** die Rezirkulationsmenge an ausgefälltem Staub durch ein Verstellen der Eintrittshöhe des Rohgasstromes (R1) in die Abscheidevorrichtung (1) eingestellt wird.

13. Verfahren nach Anspruch 11 oder 12, **dadurch gekennzeichnet, dass** die Rezirkulationsmenge an ausgefälltem Staub durch teilweises Abführen des ausgefällten Staubes während dem Betrieb der Abscheidevorrichtung (1) eingestellt wird.

## Claims

1. Filter device (1) for adsorption of gaseous constituents from a gas flow, comprising a filter chamber (2) with filters (8) arranged therein, a clean-gas chamber (4), which is connected to the filter chamber (2) in a fluid-conducting manner via the filters (8), and a collection chamber (6), which is arranged beneath the filter chamber (2), is open towards the filter chamber (2) and has an interior which narrows towards the bottom, **characterized in that** an unfiltered-gas duct (7b), which leads from the outside, is arranged in the lower area (6a) of the collection chamber (6), in such a manner that it can be adjusted in the direction (7c) towards the filters (8), and **in that** a dust-discharge device (12), which leads towards the outside, is arranged in the lower area (6a).

2. Filter device (1) according to Claim 1, **characterized in that** the filter (8) is designed as a ceramic filter or a bag filter.

3. Filter device (1) according to one of the preceding claims, **characterized in that** a tubular guide element (9) which runs in the direction (7c) towards the filters is arranged at least in the collection chamber (6), and **in that** the guide element (9) and the unfiltered-gas duct (7b) are arranged and designed in such a manner with respect to one another that the unfiltered-gas duct (7b) opens out into the guide element (9) and a gap (9c) which runs in the direction (7c) towards the filters is formed between the guide element (9) and the unfiltered-gas duct (7b).

4. Filter device (1) according to one of the preceding claims, **characterized in that** a sealing element (10), through which the unfiltered-gas duct (7b) runs in such a manner that it can be adjusted in the direction (7c) towards the filters, is arranged at the bottom end of the collection chamber (6).

5. Filter device (1) according to one of the preceding claims, **characterized in that** the collection chamber (6) has an inclined, in particular conical inner wall.

6. Filter device (1) according to one of the preceding claims, **characterized in that** the discharge device (12) is designed as a drivable conveyor worm (13).

7. Filter device (1) according to one of Claims 1 to 5, **characterized in that** the collection chamber (6) has an opening (6b), and the discharge device (12) has a movable cover device (12b) for affecting the clear width of the opening (6b).

8. Filter device (1) according to one of the preceding claims, **characterized in that** a drive device (15) for changing the position of the unfiltered-gas duct (7b) in direction (7c) is provided.

9. Filter device (1) according to one of the preceding claims comprising sensors (16, 17) for determining the quantity of dust, drive means (15, 18) for actuating the position of the unfiltered-gas duct (7b) and of the discharge device (12), and an activation device (19) which detects at least the signals from the sensors (16, 17) and activates the drive means (15, 18).

10. Installation comprising at least one filter device (1) according to one of the preceding claims.

11. Process for adsorption or chemisorption of gaseous constituents from an unfiltered gas flow (R1), in which process the unfiltered gas flow (R1) is fed to a filter device (1) according to one of claims 1 to 9, where dusts are separated out and precipitated, **characterized in that** the unfiltered gas flow (R1) is fed to the separation device (1) in such a manner that the amount of precipitated dust which is recirculated in the separation device (1) can be controlled during operation.

12. Process according to Claim 11, **characterized in that** the amount of precipitated dust which is recirculated is set by adjusting the height at which the unfiltered gas flow (R1) enters the separation device (1).

13. Process according to Claim 11 or 12, **characterized in that** the amount of precipitated dust which is recirculated is set by removing some of the precipitated dust during operation of the separation device (1).

## Revendications

1. Dispositif de filtration (1) destiné à l'adsorption de composants gazeux d'un écoulement de gaz, qui comprend une chambre de filtration (2) dans laquelle sont agencés des filtres (8), une chambre (4) de gaz pur reliée en écoulement de fluide avec la chambre de filtration (2) par l'intermédiaire des filtres (8) et un espace de collecte (6) agencé sous la chambre de filtration (2), ouvert vers la chambre de filtration (2) et qui présente un espace intérieur qui se rétrécit vers le bas, **caractérisé en ce qu'**une canalisation de gaz brut (7b) qui débouche de l'extérieur est agencée dans la région inférieure (6a) de l'espace de collecte (6) de façon à pouvoir être déplacée dans la direction (7c) qui conduit vers les filtres (8) et **en ce qu'**un dispositif (12) d'évacuation des poussières qui conduit vers l'extérieur est agencé dans la région inférieure (6a).

2. Dispositif de filtration (1) selon la revendication 1, **caractérisé en ce que** le filtre (8) est configuré comme filtre en céramique ou comme filtre à manchon.

3. Dispositif de filtration (1) selon l'une des revendications précédentes, **caractérisé en ce qu'**un élément de conduit tubulaire (9) qui s'étend dans la direction (7c) qui conduit vers les filtres est agencé au moins dans l'espace de collecte (6) et **en ce que** l'élément de conduit (9) et la canalisation de gaz brut (7b) sont configurés et agencés l'un face à l'autre de telle façon que la canalisation de gaz brut (7b) débouche dans l'élément de conduit (9) et que l'on obtient entre l'élément de conduit (9) et la canalisation de gaz brut (7b) un interstice (9c) qui s'étend dans la direction (7c) qui conduit vers les filtres.

4. Dispositif de filtration (1) selon l'une des revendications précédentes, **caractérisé en ce qu'**à l'extrémité inférieure de l'espace de collecte (6) est agencé un élément d'étanchéité (10) dans lequel la canalisation de gaz brut (7b) s'étend de façon à pouvoir être déplacée dans la direction (7c) qui conduit vers les filtres.

5. Dispositif de filtration (1) selon l'une des revendications précédentes, caractérisé en ce l'espace de collecte (6) présente une paroi intérieure inclinée et en particulier conique.

6. Dispositif de filtration (1) selon l'une des revendications précédentes, **caractérisé en ce que** le dispositif d'évacuation (12) est configuré comme une vis sans fin entraînable (13).

7. Dispositif de filtration (1) selon l'une des revendications 1 à 5, **caractérisé en ce que** l'espace de collecte (6) présente une ouverture (6b), le dispositif d'évacuation (12) présentant un dispositif déplaçable de recouvrement (12b) destiné à agir sur la largeur intérieure de l'ouverture (6b).

8. Dispositif de filtration (1) selon l'une des revendications précédentes, **caractérisé en ce qu'**un dispositif d'entraînement (15) est agencé de manière à permettre de modifier la position de la canalisation de gaz brut (7b) dans la direction (7c).

9. Dispositif de filtration (1) selon l'une des revendications précédentes, qui présente des détecteurs (16, 17) destinés à déterminer la quantité de poussière, des moyens d'entraînement (15, 18) destinés à positionner la canalisation de gaz brut (7b) et le dispositif d'évacuation (12) et un dispositif de commande (19) qui saisit au moins les signaux des détecteurs (16, 17) et commande les moyens d'entraînement (15, 18).

10. Installation qui comprend au moins un dispositif de filtration (1) selon l'une des revendications précédentes.

11. Procédé d'adsorption ou de chimisorption de composants gazeux d'un écoulement (R1) de gaz brut, dans lequel l'écoulement (R1) de gaz brut est apporté à un dispositif de filtration selon l'une des revendications 1 à 9 dans lequel des poussières se déposent et précipitent, **caractérisé en ce que** l'écoulement (R1) de gaz brut est apporté au dispositif de séparation (1) de telle sorte que la quantité de poussière précipitée qui est recirculée dans le dispositif de séparation (1) peut être contrôlée en fonctionnement.

12. Procédé selon la revendication 11, **caractérisé en ce que** la quantité de poussières précipitées mise en recirculation est régulée par un ajustement de la hauteur d'entrée de l'écoulement (R1) de gaz brut dans le dispositif de séparation (1).

13. Procédé selon les revendications 11 ou 12, **caractérisé en ce que** la quantité de poussières précipitées mise en recirculation est régulée par évacuation d'une partie des poussières précipitées en fonctionnement dans le dispositif de séparation (1).
